# FASCICULE DE BREVET EUROPEEN

(11) **EP 2 555 201 B1**
(45) Date de publication et mention de la délivrance du brevet: **10.08.2016**
(21) Numéro de dépôt: 12178730.3
(22) Date de dépôt: 31.07.2012
(51) Int. Cl.: B29C 70/56, C04B 35/52, C04B 35/565, C04B 35/80, C04B 35/83, G21C 3/06, G21C 21/00

(54) **Procédé de fabrication amelioré d'une pièce à geometrie tubulaire en matériau composite à matrice céramique**
Verfahren zur verbesserten Herstellung eines Werkstücks mit rohrförmiger Geometrie aus Keramikmatrix-Verbundmaterial
Improved method of manufacturing a tubular geometry part in a ceramic matrix composite material

(30) Priorité: 04.08.2011 FR 1157154
(43) Date de publication de la demande: 06.02.2013
(73) Titulaire: Commissariat à l'Énergie Atomique et aux Énergies Alternatives, 75015 Paris (FR)
(72) Inventeur: Lorrette, Christophe, 33140 VILLENAVE D'ORNON (FR); Nunes, Daniel, 91400 SACLAY (FR); Sauder, Cédric, 78730 SAINT ARNOULT EN YVELINES (FR)
(74) Mandataire: Ilgart, Jean-Christophe

(56) Documents cités:
- US-A- 3 960 359
- US-A- 5 125 179
- US-A1- 2006 039 524
- US-A1- 2007 175 583
- US-B1- 6 174 595

## Description

### DOMAINE TECHNIQUE

La présente invention se rapporte au domaine de la fabrication de pièces en matériau composite à matrice céramique.

Elle concerne en particulier la fabrication de pièces creuses s'étendant selon une direction longitudinale et dont le renfort est réalisé à partir de fibres entrelacées, de préférence tressées.

Elle concerne également un dispositif d'étirement particulier qui est utilisable au cours de la fabrication de ces pièces creuses pour mettre en tension leurs renforts.

### ÉTAT DE LA TECHNIQUE ANTÉRIEURE

Les pièces en matériaux composites à matrice céramique (également appelés matériaux CMC) sont constituées d'une matrice céramique, qui est renforcée par une structure fibreuse ; la structure fibreuse assure la tenue mécanique de la pièce, tandis que la matrice en assure la cohésion.

Les pièces en matériaux CMC sont particulièrement appréciées dans de nombreux domaines de l'industrie en raison de leurs propriétés mécaniques remarquables, notamment en termes de dureté, de ténacité, de tenue à l'usure et de résistance aux chocs mécaniques et thermiques.

De telles pièces sont par exemple utilisées dans l'aéronautique pour réaliser des disques de freins ou des pièces de structures destinées à entrer dans la réalisation de réacteurs fonctionnant à haute température ; elles entrent également dans la réalisation de pièces de structures dans les turbines à gaz, dans la réalisation de matériau de gainage pour les réacteurs nucléaires ou encore dans la réalisation de barres de contrôle...

A titre d'illustration, des exemples de réalisation de telles pièces sont décrits dans US 5,125,179 A, US 2007/175583 A1, US 2006/039524 A1 et US 6,174,595 B1.

Dans le cadre de cette invention, nous nous intéressons en particulier aux pièces en matériau CMC dont la structure fibreuse (ou préforme) est réalisée à partir de fibres entrelacées, par exemple tressées, et présente une direction privilégiée de mise en tension selon une direction longitudinale.

Pour la fabrication de telles pièces, la première étape consiste à réaliser une préforme fibreuse poreuse ayant la forme et les dimensions de la pièce que l'on souhaite obtenir.

La préforme fibreuse est réalisée à partir de fils de fibres continus en céramique (par exemple des fibres en carbone ou en carbure de silicium) ; chacun des fils utilisés peut comprendre jusqu'à plusieurs centaines de fibres, voire plusieurs milliers ou dizaines de milliers de fibres.

A la fin de cette étape, la préforme obtenue est appelée préforme sèche et possède une grande souplesse et une porosité importante.

Afin de rendre la pièce rigide et de lui donner des caractéristiques mécaniques intéressantes, il est ensuite nécessaire de réaliser une étape dite de densification, qui consiste à venir combler la majorité de la porosité de la préforme sèche par une ou plusieurs phases céramiques denses (carbone, carbure de silicium...).

Cette étape de densification peut être effectuée par différentes techniques dont les plus connues sont l'infiltration chimique en phase vapeur (ou CVI pour « Chemical Vapor Infiltration » en anglais) et l'infiltration de polymère et pyrolyse (ou PIP pour « Polymer Infiltration and Pyrolysis » en anglais).

Quelle que soit la technique utilisée pour réaliser la densification, il est nécessaire d'utiliser des outillages particuliers qui servent d'éléments support à la préforme et qui permettent de maîtriser les caractéristiques mécaniques et la géométrie finale des pièces composites que l'on souhaite obtenir. Il est bien entendu essentiel que ces outillages soient chimiquement compatibles avec la préforme fibreuse et avec les produits utilisés (gaz et/ou liquides) aux hautes températures requises par les procédés de densification utilisés (environ 1000°C, voire au-delà).

Dans le cas particulier de la réalisation de pièces à axe de révolution (tubes ou autres), on utilise fréquemment des mandrins comme support de la préforme ; la préforme est ainsi mise en forme sur le mandrin par toutes techniques d'entrelacement de fibres, par exemple par tressage ou par enroulement filamentaire autour du mandrin.

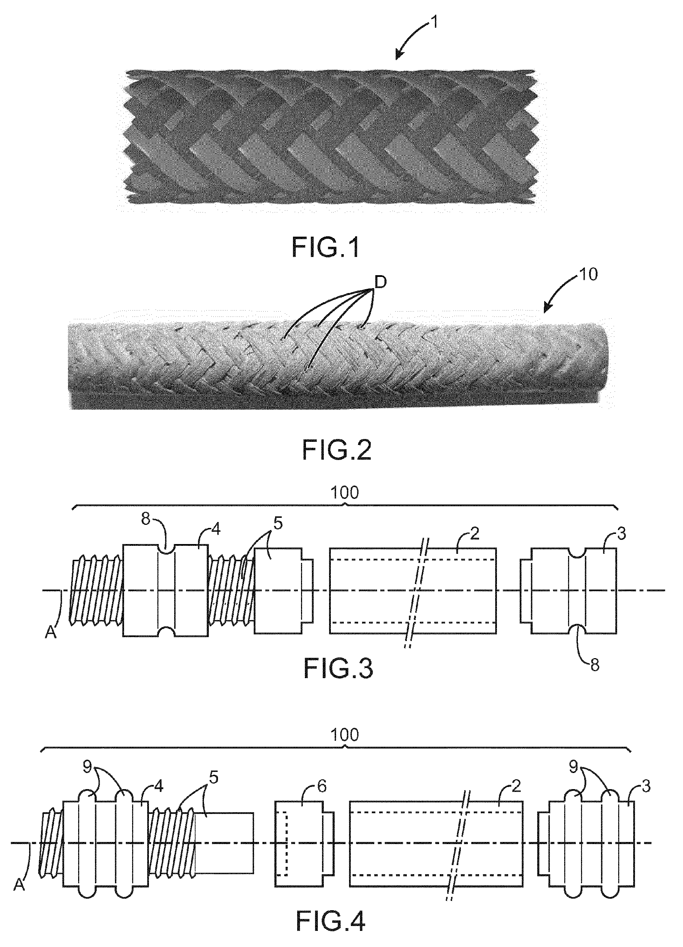

Un exemple d'une telle préforme 1 est représentée dans la figure 1.

Cependant, il s'avère que les pièces qui sont réalisées ainsi présentent des défauts. En effet, en regardant la figure 2, qui représente un tube en matériau composite CMC obtenu à l'issue de l'étape de densification de la préforme, on peut constater que ce tube comporte des défauts de forme (D) importants dans sa partie centrale. Les Inventeurs pensent que ces défauts sont dus au relâchement de la préforme fibreuse avant et/ou au cours de l'étape de densification.

Les Inventeurs se sont donc fixé comme but de concevoir un dispositif permettant d'étirer (mettre en tension) une préforme et un procédé de fabrication d'une pièce creuse en matériau CMC s'étendant selon une direction longitudinale, qui ne présentent pas les inconvénients de l'art antérieur.

Plus précisément, les Inventeurs ont cherché à concevoir un procédé de fabrication qui permette d'améliorer la qualité des pièces réalisées, à savoir un procédé qui permette de conserver les caractéristiques mécaniques et/ou de respecter les cotes, les tolérances et/ou la rugosité de la surface des pièces en matériau CMC ainsi réalisées.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a tout d'abord pour objet un dispositif d'étirement selon une direction longitudinale d'une préforme en fibres entrelacées ayant un corps et deux extrémités opposées, ledit dispositif comprenant les éléments coaxiaux suivants :
- un corps principal longitudinal destiné à supporter le corps de la préforme ;
- un premier organe de montage de la préforme, monté sur l'une des extrémités du corps principal ;
- un deuxième organe de montage de la préforme, monté par une liaison hélicoïdale sur une tige de commande, elle-même montée sur l'autre des extrémités du corps principal de manière rotative selon son axe ;
la tige de commande étant apte à tourner librement par rapport à au moins l'un des éléments choisis parmi le corps principal et le premier organe de montage ;
ces éléments coaxiaux étant conçus de manière à pouvoir, lorsque les extrémités de la préforme sont maintenues sur les premier et deuxième organes de montage, coopérer les uns avec les autres de sorte que la rotation de la tige de commande selon son axe entraine la translation du deuxième organe de montage selon ledit axe et, par voie de conséquence, l'éloignement des premier et deuxième organes de montage l'un de l'autre selon cet axe, provoquant l'étirement de la préforme selon la direction longitudinale.

L'éloignement des premier et deuxième organes de montage résulte en un déplacement latéral des deux organes de montage d'une position rapprochée à une position éloignée.

De préférence, au cours de la rotation de la tige de commande, au moins l'un des organes de montage est maintenu fixe par rapport à un référentiel extérieur audit dispositif d'étirement.

Avantageusement, le montage de la tige de commande sur l'extrémité du corps principal se fait via un organe intermédiaire, coaxial avec le corps principal et le deuxième organe de montage, qui est disposé entre le corps principal et le deuxième organe de montage. Cet organe supplémentaire permet de faciliter la rotation de la tige de commande. En effet, la tige de commande doit tourner par rapport au corps principal et cela est rendu plus aisé par l'introduction de cet organe intermédiaire qui, lui, reste fixe par rapport au corps principal. Cet organe intermédiaire est avantageusement choisi en un matériau ayant un coefficient de friction moindre que la tige de commande de manière à faciliter la rotation de celle-ci.

On précise que le corps principal du dispositif d'étirement peut être un élément plein ou un élément creux. Lorsqu'il s'agit d'un élément creux, il peut être tubulaire (mandrin...).

Selon une variante, chacun des éléments coaxiaux choisis parmi le corps principal, le premier organe de montage et éventuellement l'organe intermédiaire peut être apte à tourner librement par rapport à la tige de commande.

Avantageusement, la tige de commande est une tige comprenant un filetage extérieur et le deuxième organe de montage est un écrou comprenant un filetage intérieur qui coopère avec le filetage de la tige de commande. Il est bien entendu que l'axe de filetage de la tige de commande coïncide avec l'axe de filetage de l'écrou. Les filetages intérieur et extérieur ont l'avantage de permettre une mise en tension progressive et sans à-coups de la préforme.

L'invention a également pour objet un procédé de fabrication d'une pièce creuse s'étendant selon une direction longitudinale en matériau composite à matrice céramique à partir d'une préforme en fibres entrelacées. Ce procédé comprend les étapes suivantes :
a) la mise en place d'une préforme de la pièce à réaliser sur un dispositif d'étirement tel que décrit ci-dessus ;
b) la solidarisation des deux extrémités de la préforme respectivement avec les premier et deuxième organes de montage du dispositif d'étirement ;
c) l'éloignement des premier et deuxième organes de montage l'un de l'autre selon la direction longitudinale jusqu'à obtenir la mise en tension de la préforme, par application d'un mouvement de rotation à la tige de commande ;
d) l'application, à la préforme ainsi mise en tension, d'un traitement de densification pour induire la densification de la préforme par formation d'une matrice dans la préforme, le traitement de densification étant réalisé à une température qui est inférieure à la température de fusion de la préforme et inférieure à la température de fusion du dispositif ;
e) retrait du dispositif d'étirement de la préforme densifiée.

De préférence, la préforme est une préforme en fibres tressées en deux dimensions (tresse 2D) ou en fibres tressées en trois dimensions (tresse 3D).

La mise en place de la préforme sur le dispositif d'étirement peut être obtenue en réalisant la préforme directement sur le dispositif d'étirement ou bien en réalisant la préforme au préalable sur un autre support (outillage classique tel qu'un mandrin), et en l'emmanchant ensuite sur le dispositif d'étirement de l'invention.

De préférence, les pièces ainsi réalisées comportent un axe de révolution ; préférentiellement, ces pièces ont une géométrie tubulaire.

Il est bien entendu que l'homme du métier saura jauger, en procédant à quelques tests, quel éloignement (ou écartement) des premier et deuxième organes de montage est nécessaire pour obtenir la mise en tension souhaitée de la préforme.

Le traitement de densification peut être obtenu par plusieurs procédés connus de l'homme de l'art ; il peut par exemple s'agir d'un traitement de type traitement chimique par infiltration en phase vapeur (ou CVI pour « Chemical Vapor Infiltration » en anglais).

Selon une variante possible du procédé, l'étape c) du procédé comprend en outre, pendant l'application du mouvement de rotation, le maintien d'au moins l'un des éléments choisis parmi les premier et deuxième organes de montage dans un référentiel extérieur au dispositif d'étirement.

Avantageusement, l'étape b) de solidarisation des deux extrémités de la préforme est mise en oeuvre par le placement, sur lesdites deux extrémités de la préforme, de moyens de serrage pour exercer un effort de serrage radial sur lesdites deux extrémités de la préforme orienté vers l'axe desdits premier et deuxième organe de montage et/ou par l'application d'une matière adhésive à l'interface entre le premier organe de montage et l'une des deux extrémités de la préforme, d'une part, et entre le deuxième organe de montage et l'autre des deux extrémités de la préforme, d'autre part.

Selon une variante, il est en outre possible d'appliquer une matière adhésive à l'interface entre les moyens de serrage et la préforme, afin de s'assurer que la préforme ne glisse par sous les moyens de serrage.

Lesdits moyens de serrage, qui permettent un maintien mécanique de la préforme sur les premier et deuxième organes de montage, peuvent par exemple être des brides de serrage ou des lanières qui sont nouées autour des premier et deuxième organes de montage.

Afin d'améliorer encore d'avantage la solidarisation des extrémités de la préforme avec les premier et deuxième organes de montage, il est possible d'associer aux moyens de serrage des moyens de blocage de ces moyens de serrage. Ainsi, selon une variante possible de l'invention, les premier et deuxième organes de montage sont en outre munis de moyens de blocage pour bloquer une translation éventuelle des moyens de serrage par rapport auxdits premier et deuxième organes de montage sur lesquels ils sont placés.

Les moyens de blocage peuvent, par exemple, être une rainure annulaire, une protubérance annulaire ou deux protubérances annulaires, de préférence parallèle, réalisées dans les premier et deuxième organes de montage ; les moyens de serrage sont alors destinés à être disposés en regard de la rainure, latéralement contre la protubérance ou positionnés entre les deux protubérances, évitant ainsi que les moyens de serrage ne se déplacent en translation par rapport aux premier et deuxième organes de montage respectifs sur lesquels ils se trouvent.

De préférence, la préforme et la pièce creuse obtenue à l'issue du procédé de fabrication ont une géométrie tubulaire ; de préférence, le dispositif d'étirement, et en particulier le corps principal, ont une géométrie tubulaire.

De préférence, le dispositif d'étirement (et en particulier le corps principal, les premier et deuxième organes de montage, la tige de commande et l'organe intermédiaire, s'il est présent) est en un matériau dont le coefficient de dilatation thermique est proche du ou égal au coefficient de dilatation thermique de la préforme. Dans le cadre de la présente invention, on précise qu'on entend par « valeur proche » une valeur qui est égale à plus ou moins la valeur du coefficient de dilatation du matériau fibreux utilisé pour réaliser la préforme (par exemple, une valeur égale à ± 4.10⁻⁶K⁻¹ dans le cas du carbure de silicium).

Le dispositif d'étirement peut ainsi avantageusement être en graphite, lorsque la préforme est réalisée à partir de fibres en carbone et/ou carbure de silicium. La préférence pour le graphite est liée à son coût modéré, sa résistance chimique et thermique aux différents procédés de densification connus de l'art antérieur pour la réalisation de matériaux CMC, mais aussi à la similitude de son coefficient de dilatation thermique avec celui des préformes fibreuses couramment utilisées (carbone, carbure de silicium...), ce qui permet au dispositif d'étirement de suivre la dilatation de la préforme lors de sa sollicitation à haute température (procédé de densification de type CVI) et de conserver ainsi une tension relativement stable.

Selon une variante possible du procédé, l'étape d) d'application d'un traitement de densification à la préforme est stoppée lorsque la préforme traitée comprend une fraction volumique en matrice supérieure à 5% et au plus égale à 60% du volume de matrice de la pièce à réaliser et le procédé comprend en outre, après l'étape e) de retrait du dispositif d'étirement, une étape f) d'application d'un traitement de densification complémentaire de la préforme obtenue à l'issue de l'étape e) à une température inférieure à la température de fusion de la préforme, afin de terminer la densification de la préforme.

Dans cette variante, on retire le dispositif d'étirement d'une préforme qui est partiellement densifiée, puis on poursuit et on termine la densification de cette préforme partiellement densifiée à une température inférieure à la température de fusion de la préforme.

De préférence, l'étape d'application d'un traitement de densification à la préforme est stoppée lorsque la fraction volumique en matrice est au plus égale à 30% en volume de matrice de la pièce à réaliser et, encore plus préférentiellement, lorsque la fraction volumique en matrice au plus égale à 20% ou, mieux encore, lorsqu'elle est au plus égale à 10% du volume de matrice de la pièce à réaliser.

En ce qui concerne l'étape e) de retrait de l'élément support de la préforme densifiée, elle peut être obtenue en procédant à un usinage du dispositif d'étirement.

Selon un mode de réalisation particulier de l'invention dans lequel le corps principal du dispositif d'étirement est en verre de silice, l'étape e) de retrait du dispositif d'étirement peut également être obtenue par attaque chimique du corps principal à l'aide d'un acide, de préférence de l'acide fluorhydrique, ou d'une base. Si les premier et deuxième organes ne sont pas en verre de silice, ils peuvent être usinés ou les extrémités de la préforme peuvent être sciées.

Un des avantages du dispositif d'étirement et du procédé de fabrication utilisant ce dispositif est qu'ils permettent de déformer la préforme dans une seule direction : la préforme est uniquement étirée selon une direction longitudinale passant par ses deux extrémités et elle n'est en aucun cas vrillée.

Par ailleurs, comme nous venons de le voir ci-dessus, la solution proposée par les Inventeurs pour remédier au moins partiellement aux inconvénients rencontrés dans les réalisations de l'art antérieur consiste à maintenir la préforme sous tension au cours de son étape de densification. Ainsi, contrairement à l'art antérieur où la préforme restait libre de tout mouvement sur un outillage servant de support (par exemple un mandrin), la préforme dans le procédé selon l'invention est maintenue sous tension. En supprimant toute liberté de mouvement à la préforme, on évite que les fibres de la préforme se « relâchent » ou, en d'autres termes, s'expansent autour de l'élément servant de support, avant ou pendant la mise en oeuvre de l'étape de densification de la préforme. En évitant un relâchement des fibres, qui, de plus, est bien souvent un relâchement irrégulier sur la longueur de la préforme, on évite ainsi d'avoir une perte du respect des cotes visées sur toute la longueur de la pièce obtenue après densification.

En outre, en évitant un relâchement régulier ou irrégulier des fibres de la préforme, on évite de voir apparaître une diminution de la fraction volumique des fibres dans les pièces obtenues à l'issue des procédés de densification connus dans l'art antérieur, une telle diminution ayant pour conséquence de modifier les caractéristiques mécaniques de la pièce finale. En effet, lorsqu'il y a un relâchement des fibres, le volume occupé par les fibres est plus grand dans les parties de la pièce où les fibres sont relâchées, ce qui fait que la fraction volumique de fibres dans la pièce finale est plus faible que prévue, ce qui conduit à une diminution de la densité de la pièce.

Au final, le dispositif d'étirement et son utilisation dans le procédé selon l'invention évitent tous ces désagréments.

Ils permettent d'assurer une fraction volumique optimale de fibres au sein de la pièce et d'obtenir des pièces ayant des caractéristiques mécaniques optimales.

La mise en tension de la préforme au cours du procédé selon l'invention peut permettre en outre de garantir une meilleur tenue de la pièce à une pression interne (gonflement) et à une pression externe. En effet, lors de sa mise en tension, la préforme est soumise à une compression circonférentielle, ce qui permet à la pièce finale de résister plus facilement à un gonflement interne ultérieur (mise en tension circonférentielle).

Ils permettent aussi, en particulier, de garantir les cotes internes et externes de la pièce sur sa longueur. Il est à noter qu'on peut par exemple obtenir, avec le procédé selon l'invention, une précision au plus de ± 0,05 mm sur les cotes internes et externes d'une pièce sur sa longueur lorsqu'on applique une tension adéquate sur une préforme dans le sens de sa longueur (direction longitudinale de la préforme).

Enfin, l'utilisation du dispositif d'étirement au cours du procédé selon l'invention permet d'assurer la reproductibilité sur les cotes géométriques lors de différentes fabrications, ce qui est primordial pour une industrialisation.

En conclusion, le dispositif d'étirement et son utilisation dans le procédé selon l'invention permettent d'améliorer la qualité (densité, caractéristiques mécaniques, respect et reproductibilité des cotes et tolérances sur toute la longueur des pièces) de pièces creuses longilignes en matériau CMC, en particulier des pièces ayant un axe de révolution (par exemple, les pièces tubulaires...), obtenues à partir d'une préforme à fibres entrelacées, de préférence tressées. Cette amélioration est particulièrement appréciable pour les pièces de faibles diamètres, à savoir des diamètres à l'échelle du centimètre ou inférieur, typiquement des diamètres externes inférieurs ou égaux à 15 mm.

L'invention sera mieux comprise à la lumière du complément de description qui suit, dans lequel on décrit en détail la réalisation d'une pièce de forme tubulaire selon le procédé de l'invention.

Bien entendu, cet exemple n'est donné qu'à titre d'illustration de l'objet de l'invention et ne constitue en aucun cas une limitation de cet objet. En particulier, la pièce peut avoir toute forme ayant un axe de révolution.

### BRÈVE DESCRIPTION DES DESSINS

La figure 1 représente de manière schématique une préforme 1 de forme tubulaire obtenue par le tressage 2D de fibres.
La figure 2 est une photographie d'un tube 10 en matériau composite obtenu par un procédé selon l'art antérieur. On peut y observer des défauts de forme (D) importants situés dans la partie centrale du tube, qui sont dus au relâchement de la texture fibreuse de la préforme avant et/ou pendant sa densification.
La figure 3 représente une vue éclatée en perspective d'un premier exemple d'un dispositif d'étirement selon l'invention.
La figure 4 représente une vue éclatée en perspective d'un second exemple d'un dispositif d'étirement selon l'invention.
Les figures 5a, 5b et 5c représentent, selon une vue de face, un détail d'un premier ou deuxième organe comportant respectivement une rainure annulaire, une protubérance annulaire et deux protubérances annulaires parallèles pour aider à l'immobilisation d'une extrémité d'une préforme par le biais d'une bride de serrage.
La figure 6 représente un exemple de dispositif d'étirement selon l'invention utilisable pour la réalisation d'une préforme ayant la forme d'un tube de diamètre interne de 8 mm.
Les figures 7a à 7d représentent des vues en détail d'éléments du dispositif d'étirement de la figure 6, à savoir une vue en détail de la tige de commande 5 (figure 7a), une vue en détail du deuxième organe de montage 4 (figure 7b), une vue en détail de l'organe intermédiaire 6 (figure 7c) et une vue en détail du premier organe de montage 3 (figure 7d).

### EXPOSÉ DÉTAILLÉ DE MODES DE RÉALISATION PARTICULIERS

En référence à la figure 3, on peut apercevoir que le dispositif d'étirement 100 selon l'invention s'étend selon une direction longitudinale (A) et se compose d'un corps principal 2 longiligne, qui est ici de forme tubulaire, d'un premier organe de montage 3, monté sur une extrémité du corps principal 2, d'une tige de commande 5, montée sur l'autre extrémité du corps principal 2 de manière rotative selon son axe, qui coïncide avec la direction longitudinale (A), et d'un deuxième organe de montage 4, monté sur la tige de commande 5 par une liaison hélicoïdale. En l'occurrence, la liaison hélicoïdale est ici obtenue grâce à la présence d'un filetage extérieur, réalisé sur la surface extérieure de la tige de commande, et d'un filetage intérieur correspondant, réalisé sur la surface interne du deuxième organe de montage (le deuxième organe de montage étant ici un élément taraudé, comme par exemple un écrou).

Ici, le corps principal 2 et le premier organe de montage 3 sont libres de tourner selon l'axe A indépendamment de la tige de commande 5 .

On précise que tous ces éléments sont coaxiaux et que leurs axes coïncident avec la direction longitudinale (A).

En référence à la figure 4, on constate qu'un organe intermédiaire 6 a été rajouté dans le dispositif d'étirement 100 représenté dans la figure 3. Cet organe intermédiaire est disposé entre la tige de commande 5 et le corps principal 2 et permet de faciliter la rotation de la tige de commande 5.

On précise également que dans la figure 3, ainsi que dans la figure 4, la représentation selon une vue éclatée fait que le premier organe 3 et la tige de commande 5 sont représentés éloignés du corps principal 2, mais qu'ils sont en réalité en contact avec ce corps principal lorsque le dispositif d'étirement est en cours d'utilisation.

Par ailleurs, dans les figures 3 et 4, le corps principal 2 est en réalité beaucoup plus long, ce qui est indiqué par le symbole //.

Les extrémités de la préforme peuvent être maintenues sur les premier et deuxième organes de montage à l'aide de moyens de serrage, comme par exemple une bride, qui, une fois mis en place, exercent une force de serrage radial sur les organes de montage orienté vers l'axe desdits organes de montage. En variante ou en complément, les extrémités de la préforme peuvent être maintenues par l'application d'une matière adhésive, par exemple de la colle, à l'interface entre les organes de montage et la préforme.

D'autre part, pour faciliter le maintien de la préforme sur les premier et deuxième organes de montage, ces derniers peuvent en outre être munis de moyens de blocage.

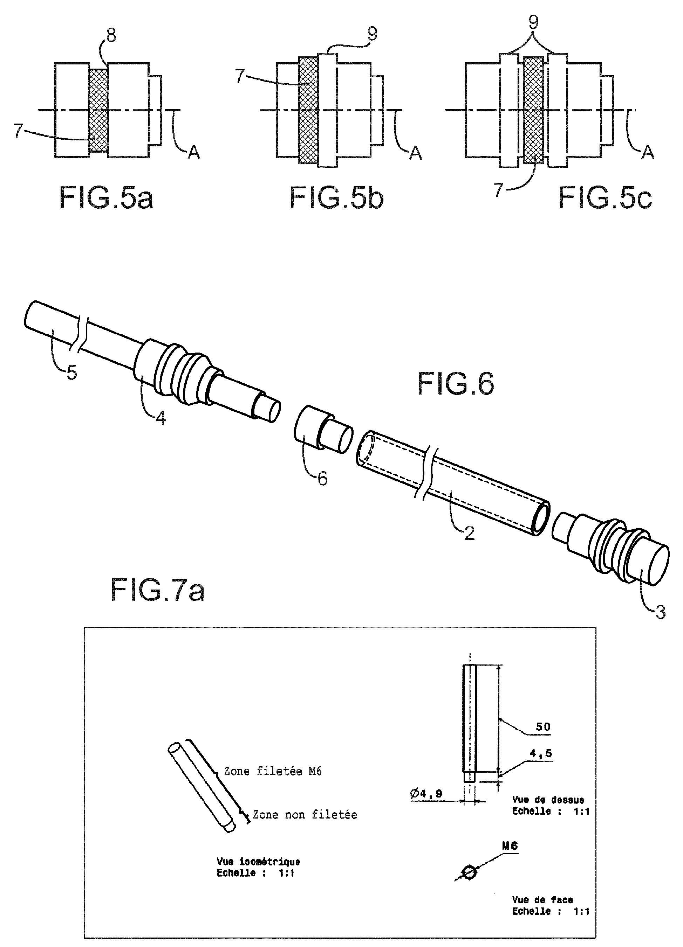

Dans les figures 5a, 5b et 5c sont représentées différents moyens de blocage possibles, à savoir une rainure 8 annulaire (figure 5a), une protubérance 9 annulaire (figure 5b) et deux protubérances 9 annulaires parallèles (figure 5c), ayant chacune un axe principal coïncidant avec l'axe principal des différents éléments coaxiaux du dispositif d'étirement 100 (corps principal, premier et deuxième organes de montage, tige de commande, et éventuellement organe intermédiaire). On précise qu'une bride 7 (exemple possible de moyens de serrage) a été représentée afin de localiser son positionnement par rapport auxdits moyens de blocage, mais la préforme, qui est destinée à être prise en sandwich entre la bride 7 et les premier et deuxièmes organes, n'a quant à elle pas été représentée par souci de simplification des figures.

Dans la figure 3, les premier et deuxième organes de montage sont munis d'une rainure 8 annulaire dont l'axe principal coïncide avec l'axe des premier et deuxième organes de montage (ainsi qu'avec la direction longitudinale (A)).

Dans la figure 4, les premier et deuxième organes de montage sont munis de deux protubérances 9 annulaires parallèles coaxiales dont l'axe principal coïncide avec l'axe des premier et deuxième organes de montage (ainsi qu'avec la direction longitudinale (A)).

Comme exemple de réalisation particulier du procédé selon l'invention, nous allons décrire en détail la fabrication d'une pièce à géométrie tubulaire et nous utiliserons pour cela le dispositif d'étirement représenté dans la figure 4.

Tout d'abord, la préforme 1 est mise en forme sur le dispositif d'étirement 100, ladite préforme étant dimensionnée de telle sorte qu'elle puisse recouvrir le corps principal 2, ainsi que les premier et deuxièmes organes de montage, 3 et 4, du dispositif d'étirement 100, afin que les deux extrémités de la préforme puissent être immobilisées sur les organes de montage 3 et 4. Il est à noter que, comme le dispositif d'étirement comporte également l'organe intermédiaire 6, celui-ci est aussi recouvert par la préforme.

La mise en forme de la préforme sur le dispositif d'étirement peut être réalisée par toute technique de mise en forme par entrelacement de fibres connue de l'état de la technique.

Cette mise en forme peut s'effectuer directement sur le dispositif d'étirement ou bien être réalisée au préalable pour ensuite être enfilée sur le dispositif d'étirement.

Les fibres constituant la préforme sont en un matériau céramique. De préférence, elles sont en carbone ou en carbure de silicium.

Dans le présent exemple, les fibres sont en carbure de silicium et sont entrelacées par tressage pour obtenir une préforme du type tresse 3D.

Puis les deux extrémités de la préforme sont immobilisées sur les premier et deuxième organes de montage et deviennent ainsi solidaires desdits premier et deuxième organes de montage. Pour cela, on utilise des brides de serrage 7 qui sont disposées dans l'espace séparant les deux protubérances 9 qui équipent chacun des premier et deuxième organes de montage 3 et 4, de manière à venir enserrer les deux extrémités de la préforme respectivement sur les premier et deuxièmes organes de montage du dispositif d'étirement 100.

On procède ensuite à la mise en tension de la préforme jusqu'à obtenir la tension souhaitée. Pour cela, on applique un mouvement de rotation à la tige de commande 5, qui se transforme en mouvement de translation du deuxième organe de montage 4.

Ce mouvement de translation du deuxième organe de montage 4 se traduit par l'éloignement des premier et deuxième organes de montage 3 et 4, ce qui provoque l'étirement de la préforme selon la direction longitudinale (A) et sa mise en tension.

De plus, comme le premier organe de montage, le corps principal et l'organe intermédiaire peuvent tourner librement autour de leur axe principal correspondant à la direction longitudinale (A) (il est toutefois suffisant que seul un de ces éléments soit apte à tourner librement autour de cet axe principal), la rotation de la tige de commande résulte uniquement en l'étirement de la préforme dans la direction longitudinale : la préforme n'est pas vrillée autour de cet axe principal.

Il est à noter qu'il est préférable de maintenir l'un des organes de montage fixe au début de la mise en tension dans un référentiel extérieur au dispositif d'étirement (par exemple, l'opérateur peut tenir fixe l'un des organes de montage en le tenant dans une main) lors de la rotation de la tige de commande. Cela permet d'éviter tout mouvement parasite de rotation qui pourrait intervenir au début de la mise sous tension.

Par ailleurs, il est à noter que plus la préforme sera tendue sur le dispositif d'étirement et plus la fraction volumique de fibres au sein du matériau composite CMC de la pièce finale sera important.

Enfin, suivant la manière dont la préforme a été mise en forme, il est possible de réduire le diamètre (interne et externe) de la préforme de quelques dixièmes de millimètres à quelques millimètres. En effet, on voit bien que la détente des fibres est plus ou moins importante selon que l'on ait, par exemple, une tresse 2D ou une tresse 3D et la mise en tension de la préforme peut donc avoir plus ou moins d'effet sur le diamètre de la préforme.

Par voie de conséquence, la mise en tension de la préforme permet également de réduire l'épaisseur de la préforme de manière significative. Par exemple, dans le cas d'une préforme de type tresse 3D ayant un diamètre interne d'environ 8 mm (c'est-à-dire le diamètre du mandrin utilisé pour la mise en forme par tressage de la préforme) et une épaisseur d'environ 1 mm, les Inventeurs ont réussi à réduire l'épaisseur de la préforme à des valeurs inférieures à 0,7 mm, tout en garantissant des cotes internes (8 mm) et externes (9,4 mm) avec une tolérance au plus de ± 0,05 mm.

Lorsque la mise en tension voulue de la préforme est obtenue, on arrête de tourner la tige de commande 5 et on procède à la densification de la préforme ainsi mise en tension en procédant à un traitement de densification, par exemple par infiltration chimique en phase vapeur (CVI), ce qui provoque l'apparition d'une matrice dans la préforme.

La densification d'une préforme peut être obtenue par plusieurs procédés connus de l'état de la technique et ces procédés ne sont donc pas décrits ici.

Dans le présent exemple de réalisation, la densification de la préforme est obtenue en plaçant la préforme mise en tension sur le dispositif d'étirement à une température élevée inférieure à la température de fusion de la préforme.

La densification peut se faire en une seule ou en deux étapes. Dans ce dernier cas, on stoppe le traitement de densification lorsque la préforme traitée contient une fraction volumique en matrice supérieure à 5% et au plus égale à 60% du volume de matrice de la pièce à réaliser ; on retire le dispositif d'étirement de la préforme partiellement consolidée et enfin, on reprend le traitement de densification de la préforme pour en terminer la densification si nécessaire, à une température inférieure à la température de fusion de la préforme.

Les fibres de la préforme peuvent par exemple être en carbone ou en carbure de silicium (mais d'autres matériaux céramiques sont également possibles); dans ce cas, le traitement de densification peut conduire à la formation d'une matrice en carbone ou en carbure de silicium, selon la température de densification appliquée.

Bien sûr, il est important que le ou les matériaux des différents éléments constituant le dispositif d'étirement, ainsi que les matériaux des moyens de serrage et de l'éventuelle matière adhésive soient aptes à résister à la température et aux agents chimiques utilisés au cours de la densification.

Il est également préférable que les matériaux choisis aient un coefficient de dilatation thermique proche de celui de la préforme, afin que le dispositif d'étirement puisse suivre la dilatation de la préforme au cours de sa densification et donc de conserver une tension stable dans la préforme.

C'est ainsi que, lorsque les fibres de la préforme sont en carbone ou en carbure de silicium, on choisit de préférence des éléments en graphite pour former le dispositif d'étirement, des moyens de serrage en carbone et une matière adhésive (colle...) en carbone (par exemple la colle « carbone » C34 de la société UCAR).

Le retrait du dispositif d'étirement de la préforme partiellement ou complètement consolidée peut être obtenu par toutes techniques de retrait connues, par exemple par usinage.

Le retrait peut par exemple être obtenu en procédant au sciage des premier et deuxième organes de montage du dispositif d'étirement, pour ensuite procéder au retrait du corps principal, par exemple par usinage ou par attaque chimique ; si le dispositif d'étirement comporte en outre un organe intermédiaire, il peut être scié comme les premier et deuxième organes de montage, ou bien être retiré par usinage ou autre technique de retrait.

Comme évoqué ci-dessus, le retrait peut également être obtenu par attaque chimique, en particulier par dissolution chimique, cette méthode étant particulièrement avantageuse lorsque le corps principal du dispositif d'étirement est en verre de silice par exemple.

Il est à noter qu'il est particulièrement avantageux d'utiliser un dispositif d'étirement dont le corps principal est en verre de silice lorsque la pièce à réaliser a un faible diamètre (inférieur ou égal à 15 mm) et/ou une longueur supérieure ou égale à 50 mm, ceci afin de pouvoir retirer facilement le corps principal en procédant à une attaque chimique (et les organes de montage par sciage, par exemple) et ainsi éviter d'endommager les cotes internes et externes de la pièce.

Il est à noter que, lorsqu'on utilise un corps principal en verre de silice, il est préférable que le dispositif d'étirement soit retiré avant que la préforme ne soit complètement consolidée, c'est-à-dire lorsque la fraction volumique en matrice de la préforme consolidée est comprise entre 5% et 40% du volume de matrice de la pièce à réaliser, comme expliqué ci-dessus, afin que les contraintes internes provoquées par les différences entre les coefficients de dilatation du verre de silice et de la céramique utilisée (carbure de silicium ou carbone, par exemple) ne génèrent pas une fissuration, voire une rupture du composite.

Comme précisé ci-dessus, il est bien évident qu'un homme du métier sait jauger quel éloignement des premier et deuxième organes de montage est nécessaire pour obtenir la mise en tension souhaitée de la préforme.

Pour la mise en tension de la préforme, la tension qu'il faut lui appliquer en utilisant le dispositif d'étirement selon l'invention dépend bien sûr de la nature et de la texture des fibres utilisées pour réaliser la préforme, mais aussi des cotes de la pièce à réaliser, ainsi que de la matière dont sont constitués les éléments du dispositif d'étirement.

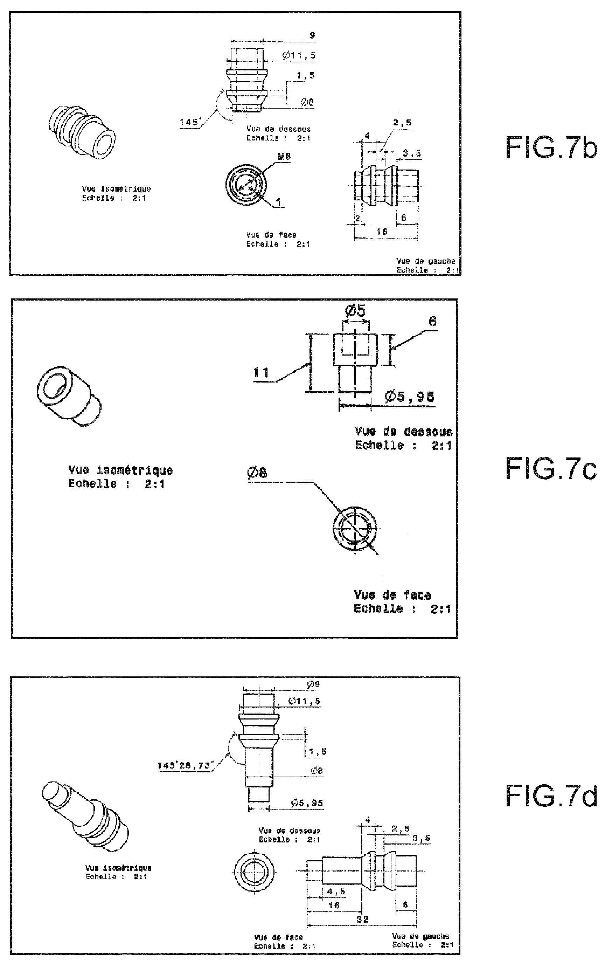

Le principe de calcul est expliqué ci-dessous pour la mise en tension d'une préforme de diamètre interne de 8 mm et d'épaisseur 0,8 mm, réalisée par tressage 3D de fibres Hi-Nicalon S de chez Nipon Carbon, à l'aide d'un dispositif d'étirement selon l'invention (représenté dans la figure 6) dont les éléments sont en graphite 2120 (carbone lorraine) et dont les cotes des éléments sont présentées dans les figures 7a à 7d.

On précise que les filetages n'ont pas été représentés dans la figure 6 et dans les figures 7a et 7b pour des raisons de clarté. On peut voir cependant, dans les vues de face des figures 7a et 7b, que le filetage est bien présent et qu'il s'agit d'un filetage M6.

Les caractéristiques des matériaux utilisés pour cet exemple de réalisation sont présentées dans le tableau ci-dessous :

| Caractéristiques | Fils Hi-Nicalon S (Nippon Carbon) | Graphite 2120 (Carbone Lorraine) |
|---|---|---|
| Densité | ~3 | 1,86 |
| Contrainte à rupture en traction (MPa) | 2500 | 35 |
| Contrainte à rupture en compression (MPa) | - | 152 |
| Module d'élasticité (GPa) | 315 | 15 |
| Déformation à rupture (%) | ∼0.6 | |

Le premier critère à prendre en compte lors de la mise en tension de la préforme est la résistance mécanique du dispositif d'étirement. En effet, il est important de ne pas solliciter le dispositif au-delà de sa résistance à rupture. Dans le cas d'espèce, le graphite étant considéré comme une céramique de part sa fragilité, un facteur de conservation est en outre appliqué sur sa valeur de résistance à rupture. On évitera donc de solliciter le graphite au-delà de 1/3 de sa résistance à rupture.

Dans le cas pris en exemple, la partie du dispositif d'étirement la plus contrainte en tension sera la tige de commande filetée. Cette tige filetée possède une résistance à rupture en traction F(N) = σ(Mpa)×S(mm²).

Comme dans le présent exemple, la tige filetée a une section (S) d'une valeur d'environ 200 mm², sa force à rupture sera donc F(N) = 35x20 = 700 N. En appliquant le critère de sécurité donné précédemment (1/3), il ne faudra donc pas dépasser une tension de 233 N de la tige filetée lors de la mise en tension de la préforme.

Le deuxième critère à prendre en compte est la résistance de la préforme et l'absence de l'application d'une précontrainte trop importante sur celle-ci qui pourrait dégrader les propriétés de la pièce une fois terminée. Pour cela, il est nécessaire de connaitre les caractéristiques à rupture de la préforme réalisée.

Dans notre exemple de réalisation, la résistance à rupture de la préforme est de l'ordre de 10000 N pour une déformation de 0,6%. Afin de ne pas pré-contraindre de manière excessive la préforme, on recommande de ne pas lui appliquer une contrainte supérieure à 1/50 de sa résistance à rupture, soit dans notre exemple 10000/50 = 200 N.

On voit qu'au final, ces deux critères se recoupent dans notre exemple de réalisation et que, dans tous les cas, il ne faudra pas mettre la préforme sous une tension supérieure à 200 N afin de respecter les deux critères établis.

Le même raisonnement pourra être suivi avec un dispositif d'étirement et une préforme de géométries différentes que celles du présent exemple.

Nous venons de décrire un exemple de réalisation d'une pièce de forme tubulaire, comme une gaine. Mais toute autre géométrie de révolution est également possible, comme par exemple la réalisation d'un tube de section hexagonale. Il suffit pour cela d'adapter la forme de la section du dispositif d'étirement en conséquence.

Les applications potentielles du procédé selon l'invention concernent la fabrication de toutes pièces creuses en composites à matrice céramique, de préférence à axe de révolution, réalisées par entrelacement de fibres (tressage 2D, 3D...) dont le respect des cotes et des caractéristiques mécaniques est important. On peut citer en particulier la fabrication de gaine combustible céramique pour les réacteurs de quatrième génération.

## Revendications

1. Dispositif d'étirement (100) selon une direction longitudinale (A) d'une préforme (1) en fibres entrelacées ayant un corps et deux extrémités opposées, ledit dispositif comprenant les éléments coaxiaux suivants :
- un corps principal (2) longitudinal destiné à supporter le corps de la préforme (1) ;
- un premier organe de montage (3) de la préforme, monté sur l'une des extrémités du corps principal (2) ;
- un deuxième organe de montage (4) de la préforme (1) ;
le dispositif étant **caractérisé en ce que** :
le deuxième organe de montage (4) de la préforme (1) est monté par une liaison hélicoïdale sur une tige de commande (5), elle-même montée sur l'autre des extrémités du corps principal (2) de manière rotative selon son axe ;
la tige de commande (5) étant apte à tourner librement par rapport à au moins l'un des éléments choisis parmi le corps principal (2) et le premier organe de montage (3) ;
ces éléments coaxiaux étant conçus de manière à pouvoir, lorsque les extrémités de la préforme (1) sont maintenues sur les premier et deuxième organes de montage (3, 4), coopérer les uns avec les autres de sorte que la rotation de la tige de commande (5) selon son axe entraine la translation du deuxième organe de montage(4) selon ledit axe et, par voie de conséquence, l'éloignement des premier et deuxième organes de montage (3, 4) l'un de l'autre selon cet axe, provoquant l'étirement de la préforme (1) selon la direction longitudinale (A).

2. Dispositif d'étirement (100) selon la revendication 1, dans lequel, au cours de la rotation de la tige de commande (5), au moins l'un des organes de montage (3, 4) est maintenu fixe par rapport à un référentiel extérieur audit dispositif d'étirement.

3. Dispositif d'étirement (100) selon la revendication 1 ou 2, dans lequel le montage de la tige de commande (5) sur l'extrémité du corps principal se fait via un organe intermédiaire (6), coaxial avec le corps principal (2) et le deuxième organe de montage (4), qui est disposé entre le corps principal (2) et le deuxième organe de montage (4)

4. Dispositif d'étirement (100) selon l'une quelconque des revendications 1 à 3, dans lequel la tige de commande (5) est une tige comprenant un filetage extérieur et le deuxième organe de montage (4) est un écrou comprenant un filetage intérieur qui coopère avec le filetage de la tige de commande (5).

5. Procédé de fabrication d'une pièce creuse s'étendant selon une direction longitudinale en matériau composite à matrice céramique à partir d'une préforme (1) en fibres entrelacées, le procédé comprenant les étapes suivantes :
a) la mise en place d'une préforme (1) de la pièce à réaliser sur un dispositif d'étirement (100) tel que décrit dans l'une quelconque des revendications 1 à 4 ;
b) la solidarisation des deux extrémités de la préforme (1) respectivement avec les premier (3) et deuxième (4) organes de montage du dispositif d'étirement (100) ;
c) l'éloignement des premier (3) et deuxième (4) organes de montage l'un de l'autre selon la direction longitudinale jusqu'à obtenir la mise en tension de la préforme (1), par application d'un mouvement de rotation à la tige de commande (5) ;
d) l'application, à la préforme (1) ainsi mise en tension, d'un traitement de densification pour induire la densification de la préforme (1) par formation d'une matrice dans la préforme (1), le traitement de densification étant réalisé à une température qui est inférieure à la température de fusion de la préforme (1) et inférieure à la température de fusion du dispositif d'étirement (100) ;
e) retrait du dispositif d'étirement (100) de la préforme (1) densifiée.

6. Procédé de fabrication selon la revendication 5, dans lequel l'étape c) comprend en outre, pendant l'application du mouvement de rotation, le maintien d'au moins l'un des éléments choisis parmi les premier (3) et deuxième (4) organes de montage dans un référentiel extérieur au dispositif d'étirement (100)

7. Procédé de fabrication selon la revendication 5, dans lequel l'étape b) de solidarisation des deux extrémités de la préforme (1) est mise en oeuvre par le placement, sur lesdites deux extrémités de la préforme (1), de moyens de serrage (7) pour exercer un effort de serrage radial sur lesdites deux extrémités de la préforme (1) orienté vers l'axe desdits premier (3) et deuxièmes (4) organe de montage et/ou par l'application d'une matière adhésive à l'interface entre le premier organe de montage (3) et l'une des deux extrémités de la préforme (1), d'une part, et entre le deuxième organe de montage (4) et l'autre des deux extrémités de la préforme (1), d'autre part.

8. Procédé de fabrication selon la revendication 7, comprenant en outre l'application d'une matière adhésive à l'interface entre les moyens de serrage (7) et les deux extrémités de la préforme (1).

9. Procédé de fabrication selon la revendication 7, dans lequel les premier (3) et deuxième (4) organes de montage sont en outre munis de moyens de blocage (8 ; 9) pour bloquer une translation éventuelle des moyens de serrage (7) par rapport auxdits premier (3) et deuxième (4) organes de montage sur lesquels ils sont placés.

10. Procédé de fabrication selon la revendication 5, dans lequel le dispositif d'étirement (100) est en un matériau dont le coefficient de dilatation thermique est proche du ou égal au coefficient de dilatation thermique de la préforme (1).

11. Procédé de fabrication selon la revendication 5, dans lequel l'étape d) d'application d'un traitement de densification à la préforme (1) est stoppée lorsque la préforme (1) traitée comprend une fraction volumique en matrice supérieure à 5% et au plus égale à 60% du volume de matrice de la pièce à réaliser et le procédé comprend en outre, après l'étape e) de retrait du dispositif d' étirement (100), une étape f) d'application d'un traitement de densification de la préforme (1) traitée obtenue à l'issue de l'étape e) à une température inférieure à la température de fusion de la préforme (1), afin de terminer la densification de la préforme (1) .

12. Procédé de fabrication selon l'une quelconque des revendications 5 à 11, dans lequel le corps principal (2) du dispositif d'étirement (100) est en verre de silice et l'étape e) de retrait du dispositif d'étirement (100) est obtenue par attaque chimique du corps principal (2) à l'aide d'un acide, de préférence de l'acide fluorhydrique, ou d'une base.

## Patentansprüche

1. Streckvorrichtung (100) in einer Längsrichtung (A) einer Vorform (1) aus verflochtenen Fasern mit einem Körper und zwei gegenüberliegenden Enden, wobei die Vorrichtung die folgenden koaxialen Elemente umfasst:
- einen länglichen Hauptkörper (2), der dazu bestimmt ist, den Körper der Vorform (1) zu tragen;
- ein erstes Anbringungselement (3) der Vorform, das auf einem der Enden des Hauptkörpers (2) angebracht ist;
- ein zweites Anbringungselement (4) der Vorform (1);
wobei die Vorrichtung **dadurch gekennzeichnet ist, dass**:
das zweite Anbringungselement (4) der Vorform (1) durch eine spiralförmige Verbindung auf einer Steuerstange (5) angebracht ist, welche wiederum auf dem anderen der Enden des Hauptkörpers (2) drehbar gemäß seiner Achse angebracht ist;
wobei die Steuerstange (5) dazu geeignet ist, sich bezüglich wenigstens einem der aus Hauptkörper (2) und erstem Anbringungselement (3) gewählten Elemente frei zu drehen;
wobei die koaxialen Elemente so ausgebildet sind, dass sie, wenn die Enden der Vorform (1) auf dem ersten und dem zweiten Anbringungselement (3, 4) gehalten sind, miteinander so kooperieren, dass die Drehung der Steuerstange (5) gemäß seiner Achse die Translation des zweiten Anbringungselementes (4) gemäß der Achse bewirkt und folglich die Entfernung des ersten und zweiten Anbringungselements (3, 4) voneinander gemäß dieser Achse, wodurch ein Strecken der Vorform (1) in der Längsrichtung (A) bewirkt wird.

2. Streckvorrichtung (100) nach Anspruch 1, bei welcher während der Drehung der Steuerstange (5) wenigstens eines der Anbringungselemente (3, 4) in Bezug auf einen äußeren Bezugsrahmen an der Streckvorrichtung fest gehalten ist.

3. Streckvorrichtung (100) nach Anspruch 1 oder 2, bei welcher die Anbringung der Steuerstange (5) auf dem Ende des Hauptkörpers über ein Zwischenelement (6) erfolgt, das koaxial mit dem Hauptkörper (2) und dem zweiten Anbringungselement (4) ist, welches zwischen dem Hauptkörper (2) und dem zweiten Anbringungselement (4) angeordnet ist.

4. Streckvorrichtung (100) nach einem der Ansprüche 1 bis 3, bei welcher die Steuerstange (5) eine Stange ist, die ein Außengewinde aufweist, und wobei das zweite Anbringungselement (4) eine Mutter ist, die ein Innengewinde aufweist und die mit dem Gewinde der Steuerstange (5) zusammenarbeitet.

5. Herstellungsverfahren für einen Hohlkörper aus Verbundstoff mit Keramikmatrix basierend auf einer Vorform (1) aus verflochtenen Fasern, der sich in einer Längsrichtung erstreckt, wobei das Verfahren die folgenden Schritte umfasst:
a) Bereitstellen einer Vorform (1) des auszuführenden Stücks auf einer Streckvorrichtung (100) gemäß der Beschreibung in einem der Ansprüche 1 bis 4;
b) Verbindung der beiden Enden der Vorform (1) mit dem ersten (3) bzw. zweiten (4) Anbringungselement der Streckvorrichtung (100);
c) Entfernen des ersten (3) und zweiten (4) Anbringungselements voneinander in der Längsrichtung bis zum Erreichen einer Spannung der Vorform (1) durch Ausführen einer Drehbewegung an der Steuerstange (5);
d) Ausführen einer Verdichtungsbehandlung an der derart unter Spannung gesetzten Vorform (1) um die Verdichtung der Vorform (1) zu veranlassen, durch Bildung einer Matrix in der Vorform (1),
wobei die Verdichtungsbehandlung bei einer Temperatur erfolgt, die niedriger als die Schmelztemperatur der Vorform (1) und niedriger als die Schmelztemperatur der Streckvorrichtung (100) ist;
e) Entnehmen der Streckvorrichtung (100) aus der verdichteten Vorform (1).

6. Herstellungsverfahren nach Anspruch 5, bei welchem Schritt c) ferner während dem Ausführen der Drehbewegung den Erhalt wenigstens eines der aus erstem (3) und zweitem (4) Anbringungselement gewählten Elemente in einem äußeren Bezugsrahmen zur Streckvorrichtung umfasst.

7. Herstellungsverfahren nach Anspruch 5, bei welchem Schritt b) des Verbindens der beiden Enden der Vorform (1) durch die Platzierung von Klemmmitteln (7) auf den beiden Enden der Vorform (1) erfolgt, um eine radiale Klemmwirkung auf die beiden Enden der Vorform (1) auszuüben, ausgerichtet auf die Achse des ersten (3) und zweiten (4) Anbringungselements und/oder durch Anwendung eines Klebemittels an der Schnittstelle zwischen dem ersten Anbringungselement (3) und einem der beiden Enden der Vorform (1) einerseits und zwischen dem zweiten Anbringungselement (4) und dem anderen der beiden Enden der Vorform (1) andererseits.

8. Herstellungsverfahren nach Anspruch 7, welches ferner die Anwendung eines Klebemittels an der Schnittstelle zwischen den Klemmmitteln (7) und den beiden Enden der Vorform (1) umfasst.

9. Herstellungsverfahren nach Anspruch 7, bei welchem das erste (3) und zweite (4) Anbringungselement ferner mit Arretierungsmitteln (8; 9) versehen sind, um eine mögliche Translation der Klemmmittel (7) bezüglich des erstes (3) und zweites (4) Anbringungselements, auf welchen sie platziert sind, zu arretieren.

10. Herstellungsverfahren nach Anspruch 5, bei welchem die Streckvorrichtung (100) aus einem Material gefertigt ist, dessen Wärmeausdehnungskoeffizient dem Wärmeausdehnungskoeffizienten der Vorform (1) entspricht oder ähnlich ist.

11. Herstellungsverfahren nach Anspruch 5, bei welchem der Schritt d) des Ausführens einer Verdichtungsbehandlung an der Vorform gestoppt wird, wenn die behandelte Vorform (1) einen Matrix-Volumenanteil von mehr als 5% und höchstens 60% des zu realisierenden Werkstücks aufweist und wobei das Verfahren ferner nach dem Schritt e) des Entnehmens der Streckvorrichtung (100) einen Schritt f) der Anwendung einer Verdichtungsbehandlung der behandelten Vorform (1) am Ende des Schritts e) bei einer Temperatur unterhalb der Schmelztemperatur der Vorform (1) umfasst, um die Verdichtung der Vorform (1) abzuschließen.

12. Herstellungsverfahren nach einem der Ansprüche 5 bis 11, bei welchem der Hauptkörper (2) der Streckvorrichtung (100) aus Siliziumoxid-Glasfaser besteht und der Schritt e) des Entnehmens der Streckvorrichtung (100) durch chemisches Ätzen des Hauptkörpers (2) mittels einer Säure, bevorzugt mittels Fluorwasserstoffsäure, oder mittels einer Base erfolgt.

## Claims

1. Tensioning device (100) along a longitudinal direction (A) of a preform (1) made from interlaced fibres with a body and two opposite ends, said device comprising the following coaxial elements:
- a longitudinal main body (2) that will support the body of the preform (1);
- first assembly element (3) of the preform, mounted on one of the ends of the main body (2);
- a second assembly element (4) of the preform (1);
the device being **characterised in that**:
the second assembly element (4) of the preform (1) is, mounted by a helical link on a control rod (5), itself mounted on the other end of the main body (2) free to rotate about its axis;
the control rod (5) being able to turn freely relative to at least one of the elements chosen among the main body (2) and the first assembly element (3);
these coaxial elements being designed to be capable of cooperating with each other when the ends of the preform (1) are held on the first and second assembly elements (3, 4), such that rotation of the control rod (5) about its axis will cause translation of the second assembly element (4) about said axis, and consequently separation of the first and second assembly elements (3, 4) from each other along this axis, causing tensioning of the preform (1) along the longitudinal direction (A).

2. Tensioning device (100) according to claim 1, wherein, during rotation of the control rod (5), at least one of the assembly elements (3, 4) is held fixed relative to a coordinate system external to said tensioning device.

3. Tensioning device (100) according to claim 1 or 2, wherein the control rod (5) is assembled onto the end of the main body through an intermediate element (6), coaxial with the main body (2) and the second assembly element (4), which is placed between the main body (2) and the second assembly element (4).

4. Tensioning device (100) according to any one of claims 1 to 3, wherein the control rod (5) is a rod with an external thread and the second assembly element (4) is a nut comprising an internal thread that cooperates with the thread on the control rod (5).

5. Process for the fabrication of a hollow part extending along a longitudinal direction made from a ceramic matrix composite material starting from an interlaced fibre preform (1), the process comprising the following steps:
a) a preform (1) of the part to be made is placed on a tensioning device (100) as described in any one of claims 1 to 4;
b) the two ends of the preform (1) are fixed to the first assembly element (3) and second assembly element (4) respectively of the tensioning device (100);
c) the first (3) and second assembly elements (4) are moved away from each other along the longitudinal direction to tension the preform (1), by applying a rotation movement to the control rod (5);
d) a densification treatment is applied to the preform (1) thus tensioned to induce densification of the preform (1) by the formation of a matrix in the preform (1), the densification treatment being done at a temperature less than the melting temperature of the preform (1) and less than the melting temperature of the tensioning device (100);
e) the tensioning device (100) is removed from the densified preform (1).

6. Fabrication process according to claim 5, wherein step c) further comprises holding at least one of the elements chosen from among the first (3) and second (4) assembly elements in a coordinate system external to the tensioning device (100), while the rotation movement is applied.

7. Fabrication process according to claim 5, wherein step b) consisting in fixing the two ends of the preform (1) is done by placing clamping means (7) on said two ends of the preform (1), to apply a radial clamping force on said two ends of the preform (1) oriented towards the axis of said first assembly element (3) and the second assembly element (4) and/or by applying, on the one hand, an adhesive material at the interface between the first assembly element (3) and one of the two ends of the preform (1), and, on the other hand, between the second assembly element (4) and the other of the two ends of the preform (1).

8. Fabrication process according to claim 7, further comprising application of an adhesive material to the interface between the clamping means (7) and the two ends of the preform (1).

9. Fabrication process according to claim 7, wherein the first assembly element (3) and the second assembly element (4) are further provided with locking means (8; 9) to prevent possible translation of the clamping means (7) relative to said first assembly element (3) and second assembly element (4) on which they are placed.

10. Fabrication process according to claim 5, wherein the tensioning device (100) is made from a material with a coefficient of thermal expansion close to or equal to the coefficient of thermal expansion of the preform (1).

11. Fabrication process according to claim 5, wherein step d) consisting in applying a densification treatment to the preform (1) is stopped when the treated preform (1) comprises a fraction by volume of the matrix greater than 5% and not more than 60% of the volume of the matrix of the part to be made and the process further comprises, after step e) in which the tensioning device (100) is removed, a step f) consisting in applying a densification treatment to the preform (1) obtained after step e) at a temperature below the melting temperature of the preform (1), to terminate densification of the preform (1).

12. Fabrication process according to any one of claims 5 to 11, wherein the main body (2) of the tensioning device (100) is made from silica glass and step e) consisting in removing the tensioning device (100) is obtained by chemical attack of the main body (2) using an acid, preferably hydrofluoric acid, or a base.
